**Europäisches Patentamt**

**European Patent Office**

**Office européen des brevets**

(19)

(11) Veröffentlichungsnummer : **0 400 252 B1**

(12)

# EUROPÄISCHE PATENTSCHRIFT

(45) Veröffentlichungstag der Patentschrift :
**22.07.92 Patentblatt 92/30**

(51) Int. Cl.$^5$: **B01D 17/02,** E02B 15/04,
C02F 1/40

(21) Anmeldenummer : **89810401.3**

(22) Anmeldetag : **30.05.89**

(54) **Vorrichtung zum Abtrennen von Substanzen von der Oberfläche einer Flüssigkeit.**

(43) Veröffentlichungstag der Anmeldung :
**05.12.90 Patentblatt 90/49**

(45) Bekanntmachung des Hinweises auf die
Patenterteilung :
**22.07.92 Patentblatt 92/30**

(84) Benannte Vertragsstaaten :
**AT CH DE FR GB IT LI SE**

(56) Entgegenhaltungen :
**DE-U- 8 623 365
FR-A- 2 381 723
GB-A- 1 183 067
US-A- 3 358 838
US-A- 3 992 292
US-A- 4 220 533
US-A- 4 268 396**

(73) Patentinhaber : **BLASER & CO. AG
Winterseistrasse Rüegsau
CH-3415 Hasle-Rüegsau (CH)**

(72) Erfinder : **Bachmann, Rolf
Eichholz 14
CH-3425 Koppigen (CH)**
Erfinder : **Kummer, Kurt
Dorfstrasse 42b
CH-3432 Lützelflüh (CH)**
Erfinder : **Iseli, Werner
Rainweidstrasse 8
CH-6330 Cham (CH)**

(74) Vertreter : **Quehl, Horst Max, Dipl.-Ing.
Patentanwalt Postfach 104 Ringstrasse 7
CH-8274 Tägerwilen (CH)**

## Beschreibung

Die Erfindung betrifft eine Vorrichtung zur Abtrennung von Öl von der Oberfläche einer Flüssigkeit, insbesondere von auf dem Kühlschmierstoff einer Werkzeugmaschine aufschwimmendem Oel, mit einer zum teilweisen Eintauchen in die Flüssigkeit bestimmten, mit einem Drehantrieb verbundenen Aufnehmscheibe, einer Einrichtung zum Abnehmen des aufgenommenen Öls von der Aufnehmscheibe und mit Fördermitteln für die Ableitung des abgenommenen Öls über die Wand eines die Flüssigkeit einschliessenden Behälters nach aussen.

Eine bekannte Vorrichtung dieser Art (US-A-4220533) hat für die Abtrennung von Oel von der Oberfläche einer Flüssigkeit eine durch einen Elektromotor angetriebene Kunststoffscheibe mit einer glatten Oberfläche, an der das Oel durch Adhäsion anhaftet, um anschliessend durch einen fest an der Vorrichtung angeordneten Abstreifer abgenommen zu werden, so dass es über eine sich über den Behälterrand erstreckende Rinne abfliesst. Die Vorrichtung selbst wird fest an dem Flüssigkeitsbehälter angeschraubt. Da das Oel von selbst über die Oberfläche der Flüssigkeit zu dieser Vorrichtung nachfliessen muss, arbeitet sie verhältnismässig langsam und ermöglicht nur eine Verminderung der Dicke der Oelschicht auf der Flüssigkeit, ohne sie vollständig zu entfernen, denn ab einer bestimmten minimalen Dicke zerreist die Oelschicht und fliesst somit nicht mehr zu der Vorrichtung hin nach. Die verbleibende Oelschicht verhindert die Luftzufuhr zu der Flüssigkeit, wie es z.B. für Kühlschmierstoffe von Werkzeugmaschinen aufgrund der dann vorzeitigen Alterung besonders nachteilig ist.

Der Erfindung liegt die Aufgabe zugrunde, die genannten Nachteile bekannter Vorrichtungen zu vermeiden und somit eine Vorrichtung der eingangs genannten Art derart zu verbessern, dass sie eine erhöhte Leistungsfähigkeit aufweist und folglich innerhalb wesentlich verkürzter Zeit Substanzen von der Oberfläche von Flüssigkeiten nahezu vollständig entfernen kann. Die Lösung dieser Aufgabe erfolgt erfindungsgemäss durch eine zur Anordnung im Bereich der Flüssigkeitsoberfläche bestimmte Fördereinrichtung zur Erzeugung einer zu der Aufnehmscheibe hin gerichteten Oberflächenströmung.

Aufgrund der durch die Fördereinrichtung erzeugten Oberflächenströmung fliesst stets neue, auf der Flüssigkeitsoberfläche schwimmende Substanz, z.B. Oel, zu der Aufnehmscheibe hin beschleunigt nach, um durch diese aufgenommen und abgeführt zu werden.

Die genannte vorbekannte Vorrichtung hat den weiteren Nachteil, dass sie nur bei einem bestimmten Flüssigkeitsstand arbeitsfähig ist und folglich nicht dafür geeignet, ist eine Flüssigkeitsoberfläche regelmässig, z.B. nach einem Zeitprogramm, zu reinigen. In bevorzugter Ausführungsform der Erfindung ist deshalb die Vorrichtung schwimmfähig ausgeführt, so dass der Flüssigkeitsspiegel relativ zu ihr eine optimale, konstante Höhe aufweist.

Weitere vorteilhafte Ausgestaltungen der erfindungsgemässen Vorrichtung sind Gegenstand der abhängigen Patentansprüche und der folgenden Beschreibung eines Ausführungsbeispieles anhand der Zeichnungen zu entnehmen. Es zeigt:

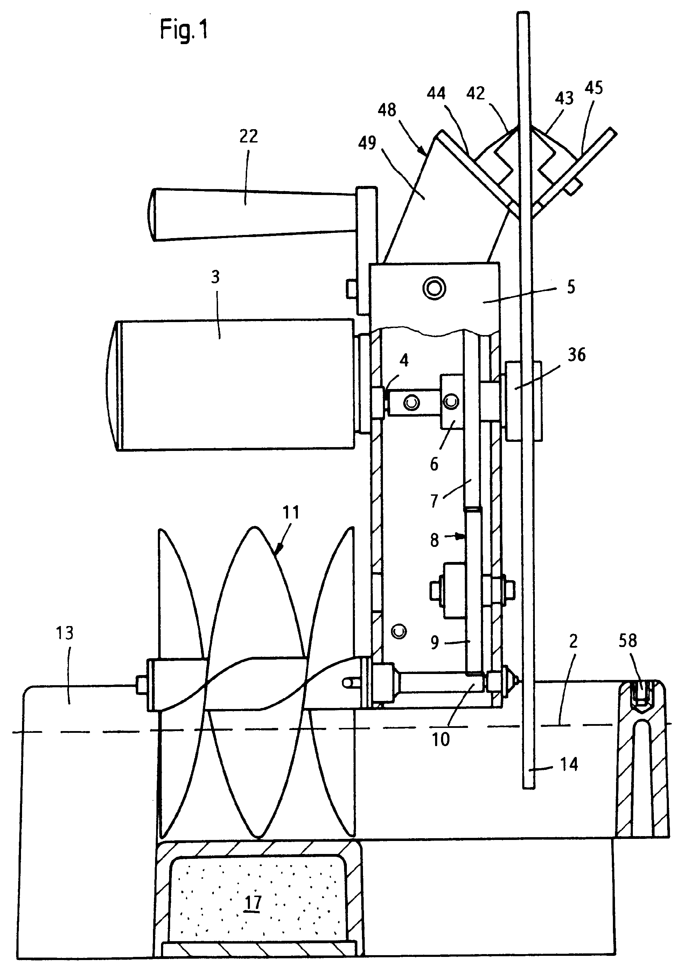

Fig.1 eine teilweise vertikal geschnittene Seitenansicht der Vorrichtung,

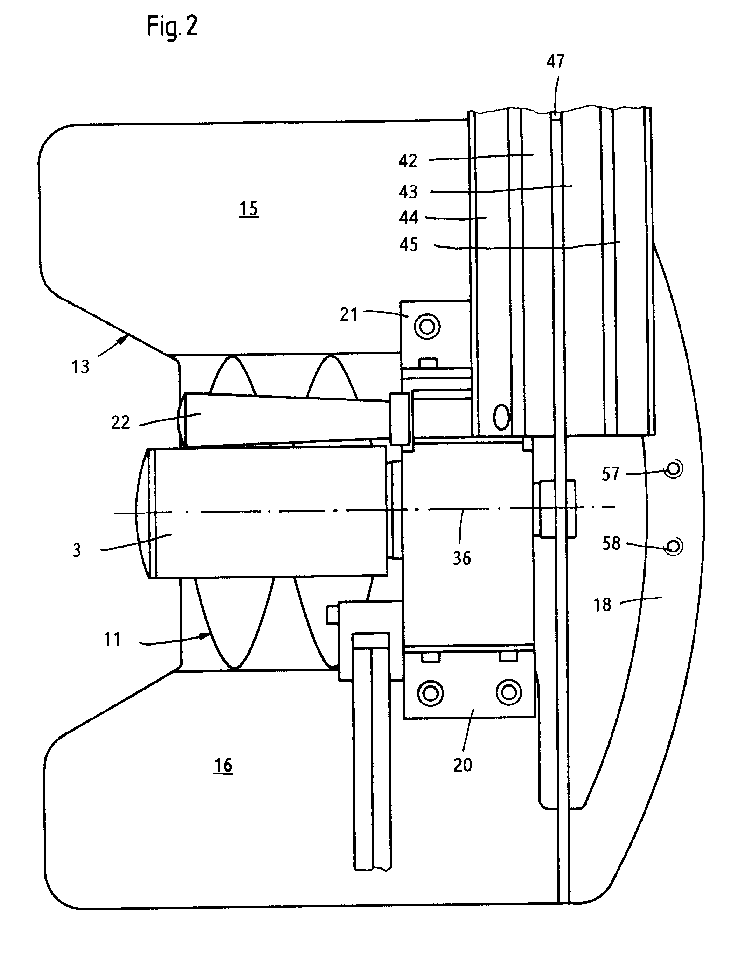

Fig.2 eine Aufsicht auf die Vorrichtung mit nur teilweiser Darstellung der Rinne und der Haltearme,

Fig.3 eine in Achsrichtung gesehene Seitenansicht der Vorrichtung.

Die Vorrichtung hat eine kreisrunde, ebene Aufnehmscheibe 1, z.B. aus einem Kunststoff, Akrylglas (Plexiglas) o.dgl., an dem Maschinenoel eine hohe Adhäsionskraft aufweist. Ihr Durchmesser wird möglichst gross gewählt, um eine hohe Leistungsfähigkeit zu erhalten und um auch bei grösseren Veränderungen der Höhe des Flüssigkeitsspiegels 2, das aufgenommene Oel ableiten zu können, wie im folgenden noch näher erläutert wird. Mit Rücksicht auf ihre vertikale Anordnung im Behälter für Kühlschmierstoff einer Werkzeugmaschine, beträgt der Durchmesser der Aufnehmscheibe 1 beispielsweise 300 mm. Die Aufnehmscheibe 1 wird durch einen Getriebemotor 3 mit geringer Drehgeschwindigkeit von z.B. 5 U/min direkt angetrieben, mit dessen Abtriebswelle 4 sie gleichachsig in dem Gehäusebock 5 gelagert ist.

Die Verbindungswelle 6 zwischen dem Motor 3 und der Aufnehmscheibe 1 trägt ein Zahnrad 7 eines Uebersetzungsgetriebes 8, das über ein weiteres, durch den Gehäusebock 5 gelagertes Zahnrad 9 die gezahnte Welle 10 einer horizontal angeordneten Förderschraube 11 antreibt. Dabei ergibt sich für die Förderschraube 11 eine Drehgeschwindigkeit von 60 U/min. Ihr Durchmesser beträgt 120 mm. Die Anwendung der Förderschraube 11 und deren verhältnismässig geringe Drehgeschwindigkeit führen in der Flüssigkeit zu einer verhältnismässig ruhigen Oberflächenströmung, durch die die auf ihr schwimmende Oelschicht gleichmässig und ohne Emulgierung mit der Flüssigkeit gegen die Aufnehmscheibe 1 gefördert wird. Diese Förderwirkung führt zu einem Anstauen der Oelschicht vor der Aufnehmscheibe 1, bzw. zu einer dickeren Oelschicht in deren Bereich, so dass die Wirksamkeit der Oelaufnahme durch die Aufnehmscheibe 1 und damit der Wirkungsgrad der Vorrichtung stark erhöht wird. Ausserdem wird durch die Förderschnecke 11 Oberflächenoel angesaugt und zu der Aufnehmscheibe 1 gefördert, das ohne diese Zwangsförderung nicht zu ihr hin nachfliessen würde, so dass die Flüssigkeitsoberfläche vollständig von Oel o.dgl. befreit werden kann.

Eine weitere Massnahme zur Verbesserung der Wirksamkeit der Aufnehmscheibe 1 und damit des Wirkungsgrads der Vorrichtung besteht in der Einhaltung eines optimalen Flüssigkeitstandes relativ zu der Förderschraube 11 und relativ zu der Aufnehmscheibe 1 durch die schwimmfähige Ausführung der Vorrichtung. Hierzu hat diese einen Schwimmkörper 13, der die Förderschraube 11 und den in die Flüssigkeit eintauchenden Bereich 14 der Aufnehmscheibe 1 u-förmig umschliesst. Dabei hat der Schwimmkörper 13 zwei seitliche Teile 15,16, die unterhalb der Förderschraube 11 durch einen Querteil 17 und in Strömungsrichtung hinter der Aufnehmscheibe 1 durch einen bogenförmigen Stegteil 18 miteinander verbunden sind. Diese Teile des Schwimmkörpers 13 sind entweder Hohlkörper oder sie bestehen aus beispielsweise mit Schaumkunststoff gefüllten Schalenkörpern. Der erwähnte Gehäusebock 5 ist mittels seitlicher Flansche 20,21 auf dem Schwimmkörper 13 befestigt.

Ein am oberen Bereich des Gehäusebocks 5 befestigter Handgriff 22 ermöglicht es, die Vorrichtung auf einfache Weise aus der Flüssigkeit herauszuheben, nachdem zuvor eine Halterung 24 von der Wand 25 des Flüssigkeitsbehälters gelöst wird oder um sie in entsprechend umgekehrter Weise in die Flüssigkeit einzusetzen.

Die Halterung 24 ist zweckmässig so ausgeführt, dass sie die Vorrichtung gegen Kippkräfte stabil horizontal ausgerichtet hält, so dass der Schwimmkörper 13 lediglich für einen ausreichenden Auftrieb vorgesehen ist. Eine derartige Halterung 24 ist bei dem dargestellten Ausführungsbeispiel der Vorrichtung erforderlich, da ihr Schwerpunkt aufgrund der Anordnung des Getriebemotors 3 oberhalb des Flüssigkeitsspiegels instabil ist. Es wäre jedoch mit entsprechendem konstruktiv grösserem Aufwand auch möglich, den Schwerpunkt stabil unter dem Flüssigkeitsspiegel anzuordnen. Die Halterung 24 ist nach Art eines kinematischen Parallelogramms ausgeführt, indem zwei Haltearme 26,27 parallel zueinander einerseits an einem einer Befestigungsvorrichtung 28 zugeordneten Bock 29 und andererseits an einer an dem Gehäusebock 5 des schwimmenden Teils der Vorrichtung befestigten Konsole 30 jeweils um eine Achse 31 bis 34 gelagert sind. Die in Anpassung an eine Höhenänderung des Flüssigkeitsspiegels 2 im Flüssigkeitsbehälter erfolgende Parallelbewegung der Haltearme 26,27 verhindert ein Kippen der Vorrichtung um eine zur Drehachse 36 der Aufnehmscheibe 1 parallele, horizontale Achse, und ihre Lagerung um Achsen 31 bis 34 verhindert eine Kippbewegung um eine zu dieser Drehachse 36 senkrechte, horizontale Achse.

Die Befestigungsvorrichtung 28 ermöglicht es, die Vorrichtung an geeigneter Stelle innerhalb des durch die Wand 25 angedeuteten Flüssigkeitsbehälters zu halten. Sie kann auf verschiedene Weise ausgeführt sein, z.B. als Klemmvorrichtung oder in der dargestellten Weise als Haltemagnet 38. Dieser Haltemagnet 38 ist über eine Achse 39 in Anpassung an die Neigung einer geeigneten Befestigungsfläche, z.B. des horizontalen Randes 40 des Flüssigkeitsbehälters, schwenkbar und anschliessend in dieser Schwenkposition durch nicht dargestellte Mittel, z.B. eine Klemmschraube, arretierbar, um den Bock 29 der Halterung 24 stets in der dargestellten vertikalen Position starr zu befestigen.

Um das von der Aufnehmscheibe 1 durch Adhäsion aufgenommene Oel zu entfernen, sind vorzugsweise beidseitig zu ihr Abstreifer 42 43 aus Hartgummi o.dgl. vorgesehen, die jeweils an einer Ableitrinne 44,45 parallel zu dieser befestigt sind. Beide Ableitrinnen 44,45 sind parallel zueinander fest verbunden, wobei sie im Bereich der Aufnehmscheibe 1 zwischen sich einen Schlitz 47 bilden. Die somit aus Paaren von Ableitrinnen und Abstreifern gebildete Ableiteinheit 48 ist über einen kurzen, an einer der Ableitrinnen 44 angebrachten Halteschenkel 49 an dem Gehäusebock 5 der Vorrichtung befestigt. Diese Befestigung erfolgt entweder starr, mit einer für das Abfliessen des abgestreiften Oels erforderlichen Mindestneigung der Ableitrinnen 44,45 oder, vorzugsweise, um eine Achse 50 schwenkbar, so dass die Ableitrinnen 44, 45 durch Auflage auf dem Rand 51 der Wand 25 des Flüssigkeitsbehälters stets die grösstmögliche Neigung aufweisen. Um die Vorrichtung für einen möglichst grossen Bereich der Höhenänderung des Flüssigkeitsspiegels 2 relativ zum Rand 51 des Flüssigkeitsbehälters betriebsfähig zu gestalten, hat die Aufnehmscheibe 1 einen möglichst grossen Durchmesser, so dass das oberste Ende 52 möglichst hoch über dem Flüssigkeitsspiegel 2 angeordnet werden kann. Dabei soll jedoch der Abstand dieses obersten Endes vom Umfang der Aufnehmscheibe 1 grösser sein als die Eintauchtiefe der Aufnehmscheibe 1 in der Flüssigkeit bzw. grösser sein als die radiale Breite der von Oel benetzten Aussenrandzone der Aufnehmscheibe 1, so dass das Oel vollständig abgestreift wird.

Eine vollständige Unabhängigkeit der Oelableitung von der Höhe des Flüssigkeitsspiegels 2 im Flüssigkeitsbehälter wäre nur mit wesentlich grösserem technischen Aufwand möglich, indem z.B. hierfür an der Vorrichtung eine Pumpe vorgesehen wird, die das abgestreifte Oel über eine Schlauchleitung aus dem Flüssigkeitsbehälter herauspumpt.

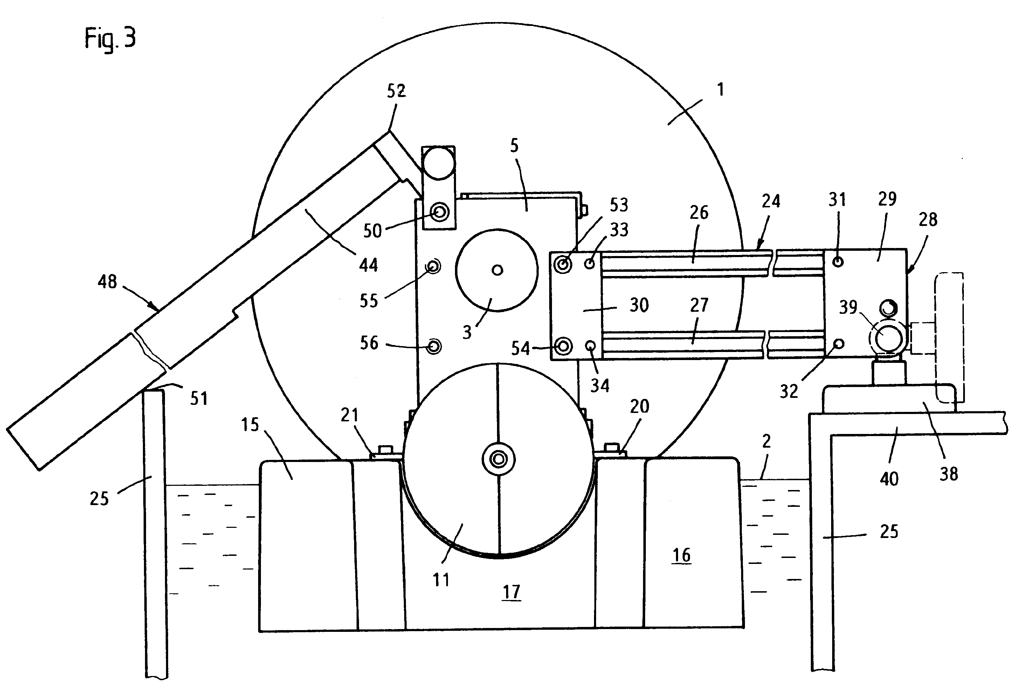

Entsprechend der Darstellung eines Ausführungsbeispieles der Vorrichtung in Fig.3 ist die Halterung 24 für die Verbindung der Vorrichtung mit dem Flüssigkeitsbehälter auf der der Ableiteinheit 48 gegenüberliegenden Seite der Vorrichtung mittels Schrauben 53,54 befestigt. Für die wahlweise Anordnung der Halterung auf der gleichen Seite wie die Ableiteinheit 48, sind an dem Gehäusebock 5 zusätzliche Schraubenlöcher 55,56 für die Schrauben 53,54 vorgesehen. Schliesslich kann die Halterung 24 auch um 90° versetzt an dem Stegteil 18 des Schwimmkörpers 13 befestigt werden, wofür Schraubenlöcher 57,58 vorgesehen sind.

**Patentansprüche**

1. Vorrichtung zur Abtrennung von Öl von der Oberfläche einer Flüssigkeit, insbesondere von auf dem Kühlschmierstoff einer Werkzeugmaschine aufschwimmendem Öl, mit einer zum teilweisen Eintauchen in die Flüssigkeit bestimmten, mit einem Drehantrieb (3) verbundenen Aufnehmscheibe (1), an der das Öl durch Adhäsion anhaftet, einer Einrichtung (48) zum Abnehmen des aufgenommenen Öls von der Aufnehmscheibe (1) und mit Fördermitteln (44,45) für die Ableitung der abgenommenen Substanz über die Wand (25) eines die Flüssigkeit einschliessenden Behälters nach aussen, gekennzeichnet durch eine zur Anordnung im Bereich der Flüssigkeitsoberfläche (2) bestimmte Fördereinrichtung (11) zur Erzeugung einer zu der Aufnehmscheibe (1) hin gerichteten Oberflächenströmung.

2. Vorrichtung nach Anspruch 1, dadurch gekennzeichnet, dass die Fördereinrichtung eine rotierende Förderschraube (11) ist.

3. Vorrichtung nach Anspruch 2, gekennzeichnet, durch einen gemeinsamen Drehantrieb (3) für die Aufnehmscheibe (1) und die Fördereinrichtung (11), wobei zwischen der Aufnehmscheibe (1) und der Fördereinrichtung (11) ein Uebersetzungsgetriebe (8) vorgesehen ist, so dass die Fördereinrichtung (11) mit einer um das Mehrfache grösseren Drehgeschwindigkeit angetrieben wird.

4. Vorrichtung nach einem der Ansprüche 1 bis 3, dadurch gekennzeichnet, dass sie mindestens einen Schwimmkörper (13) aufweist, so dass sie schwimmfähig ist und der Flüssigkeitsspiegel (2) relativ zu ihr konstant ist.

5. Vorrichtung nach Anspruch 4, dadurch gekennzeichnet, dass ein Schwimmkörper (13) oder eine Anordnung aus Schwimmkörperteilen (15-18) die Fördereinrichtung (11) zur Erzeugung einer Oberflächenströmung beidseitig zur Strömung u-förmig einschliesst.

6. Vorrichtung nach Anspruch 4, dadurch gekennzeichnet, dass die Einrichtung zum Abnehmen des Öls aus mindestens einem schienenförmigen, an einer Seite der Aufnehmscheibe (1) anliegenden Abstreifer (42,43) besteht, und die Fördermittel zur Ableitung der abgenommenen Substanz durch eine Rinne (44,45) gebildet sind, an der der Abstreifer (42,43) angeordnet ist, wobei die aus Rinne (44,45) und Abstreifer (42,43) gebildete Einheit (48) an ihrem oberen Bereich über eine Achse (50) schwenkbar an der Vorrichtung befestigt ist, so dass das obere Ende (52) des Abstreifers am oberen Bereich der Aufnehmscheibe (1) in einem Abstand vom Scheibenumfang anliegt, der mindestens der Eintauchtiefe der Aufnehmscheibe (1) in die Flüssigkeit entspricht.

7. Vorrichtung nach einem der Ansprüche 4 bis 6, gekennzeichnet durch eine mindestens einen einachsig schwenkbaren Haltearm (26, 27) aufweisende Halterung (24) für eine der Höhe des Flüssigkeitsspiegels (2) angepasste Verbindung der Vorrichtung mit dem die Flüssigkeit einschliessenden Behälter oder mit einer diesen Behälter aufweisenden Einrichtung.

8. Vorrichtung nach Anspruch 7, dadurch gekennzeichnet, dass die Halterung (24) zwei zueinander parallele Haltearme (26,27) aufweist, deren beide Enden jeweils um eine Achse (31-34) schwenkbar gelagert sind, wobei die Haltearme (26,27) einerseits mit dem schwimmenden Teil der Vorrichtung und andererseits mit einer Befestigungsvorrichtung (28,38) für die Befestigung der Vorrichtung an dem Flüssigkeitsbehälter verbunden sind.

9. Vorrichtung nach Anspruch 8, dadurch gekennzeichnet, dass die Haltearme (26,27) an einem Bock (29) angelenkt sind, der über eine feststellbare Schwenkachse (39) mit Befestigungsmitteln (38) verbunden ist.

10. Vorrichtung nach Anspruch 9, dadurch gekennzeichnet, dass die Befestigungsmittel aus einem Haltemagnet (38) bestehen.

**Claims**

1. An apparatus for removing oil from the surface of a liquid, particularly oil floating on the cooling lubricant of a machine tool, with a receiving disk (1) connected to a rotary drive (3) intended for partial immersion in the liquid and receiving oil by adhesion, a device (48) for removing the received oil from the receiving disk (1) and with feed means (44,45) for draining away to the outside the substance removed over the wall (25) of a container enclosing the liquid, wherein a feed means (11) is positioned in the vicinity of the liquid surface (2) for producing a surface flow directed towards the receiving disk (1).

2. An apparatus according to claim 1, wherein the feed means is a screw-conveyor (11).

3. An apparatus according to claims 1, wherein there is a common rotary drive (3) for the receiving disk (1) and the feed means (11) and between the receiving disk (1) and the feed means (11) is provided a transmission gear (8), so that the feed means (11) is driven with a much higher rotational speed.

4. An apparatus according to one of the claims 1 to 3, wherein it has at least one float (13), so that it is floatable and the liquid level (2) is constant relative thereto.

5. An apparatus according to claim 4, wherein a float (13) or an arrangement of float parts (15 to 18) surrounds in U-shaped manner the feed means (11) for producing a surface flow.

6. An apparatus according to claim 4, wherein the device for removing the substance comprises at least one rail-like stripper (42, 43) engaging on one side of the receiving disk (1) and the feed means for draining off the removed oil are formed by a channel (44,45) on which the stripper (42,43) is located, the unit (48) formed from channel (44,45) and stripper (42,43) being pivotably fixed in its upper area to the apparatus by means of a spindle (50), so that the upper end (52) of the stripper engages on the upper area of the receiving disk (1) at a distance from the disk circumference, which at least corresponds to the immersion depth of the disk (1) in the liquid.

7. An apparatus according to one of the claims 4 to 6, wherein there is a fastening (24) having at least one uniaxially pivotable supporting arm (26,27) for a connection of the apparatus to the liquid-enclosing container or to a device having said container adapted to the height of the liquid level (2).

8. An apparatus according to claim 7, wherein the fastening (24) has two parallel supporting arms (26,27), whose two ends are in each case pivotably mounted about a spindle (31 to 34), the supporting arms (26,27) being connected on the one hand to the floating part of the apparatus and on the other to a fastening device (28,38) for fastening the apparatus to the liquid container.

9. An apparatus according to claim 8, wherein the supporting arms (26,27) are articulated to a support (29), which is connected by means of an adjustable pivot pin (39) to the fastening means (38).

10. An apparatus according to claim 9, wherein the fastening means comprise a holding magnet (38).


**Revendications**

1. Dispositif pour la séparation d'huile de la surface d'un liquide, notamment d'huile surnageant le lubrifiant de réfrigération d'une machine-outil, avec un disque récepteur (1) relié à un mécanisme d'entraînenent rotatif (3), disque récepteur (1) auquel l'huile s'attache par adhésion, avec une installation (48) pour détacher du disque récepteur (1) l'huile qui y adhére, et avec des moyens de transport (44, 45) pour l'évacuation, vers l'extérieur, par-dessus la paroi 25 d'un réservoir contenant le liquide, de l'huile détachée, caractérisé par une installation de transport (11) destinée à être disposée dans la région de la surface du liquide (2), installation de transport qui engendre une courant superficiel dans la direction du disque récepteur (1).

2. Dispositif suivant la revendication 1, caractérisé en ce que l'installation de transport est une vis de transport rotative sans fin (11).

3. Dispositif suivant la revendication 2, caractérisé par un mécanisme d'entraînement rotatif commun (3) pour le disque récepteur (1) et l'installation de transport (11), un mécanisme de transmission (8) étant prévu entre le disque récepteur (1) et l'installation de transport (11), de telle sorte que l'installation de transport est entraînée à une vitesse de rotation qui est un multiple de la vitesse de rotation du disque récepteur (1).

4. Dispositif suivant l'une quelconque des revendications de 1 à 3, caractérisé en ce qu'il présente au moins un flotteur (13), de sorte qu'il est capable de flotter et qu'il y a une relation constante entre le dispositif et le niveau (2) du liquide.

5. Dispositif suivant la revendication 4, caractérisé en ce qu'un flotteur (13) ou une disposition composée d'éléments de flotteur (15 -18) entoure un U de part et d'autre du courant l'installation de transport (11) engendrant le courant superficiel.

6. Dispositif suivant la revendication 4, caractérisé en ce que le dispositif servant à détacher l'huile comprend au moins une raclette en formn de rail s'appliquant d'un côté sur le disque récepteur (1), et en ce que les moyens de transport pour évacuer l'huile détachée sont constitués par une rigole (44, 45), sur laquelle est disposée la raclette (42, 43), l'unité formée par la rigole (44, 45) et la raclette (42, 43) étant dans sa région supérieure montée à pivotement, à l'aide d'un axe (50), sur le dispositif, de telle sorte que l'extrémité supérieure (52) de la raclette est, dans la région supérieure du disque récepteur (1) rapprochée du pourtour du disque d'une distance qui correspond au moins à la profondeur d'immersion du disque recepteur (1) dans le liquide.

7. Dispositif suivant l'une quelconque des revendications de 4 à 6, caractérisé par une attache (24) comportant au moins un bras de support (26, 27) pivotant autour d'un axe, aux fins d'une liaison, adaptée à la hauteur du niveau de liquide (2), du dispositif avec le reservoir contenant le liquide ou avec un dispositif présentant ce réservoir.

8. Dispositif suivant la revendication 7, caractérisé en ce que l'attache (24) présente deux bras de support (26, 27) parallèles l'un à l'autre, dont les deux extrémités sont chacune montées à pivotement sur un axe (31 - 34), les bras de support (26, 27) étant reliés d'une part à la partie flottante du dispositif et d'autre part à un dispositif de fixation (28, 38) pour la fixation du dispositif au réservoir de liquide.

9. Dispositif suivant la revendication 8, caractérisé en ce que les bras de support (26, 27) sont articulés sur un chevalet (29), lequel est par l'intermédiaire d'un axe de pivotement bloquable (39) relié à des moyens de fixation (38).

10. Dispositif suivant la revendication 9, caractérisé en ce que les moyens de fixation sont constitués d'un aimant de retenue (38).

Fig. 1

Fig. 2

Fig. 3

EP 0 400 252 B1